# DEMANDE DE BREVET EUROPEEN

(11) **EP 0 640 283 A1**
(43) Date de publication de la demande: **01.03.1995**
(21) Numéro de dépôt: 94870135.4
(22) Date de dépôt: 02.08.1994
(51) Int. Cl.: A01K 13/00

(54) **Baignoire notamment pour chien**

(30) Priorité: 23.08.1993 BE 9300865
(71) Demandeur: Adam, Claude, B-6530 Thuin (BE)
(72) Inventeur: Adam, Claude, B-6530 Thuin (BE)
(74) Mandataire: Vanhamme, Joseph Louis

(57) **Abrégé**

Baignoire notamment pour chien, réalisée sous forme d'un réceptacle de forme oblongue destiné à être rempli d'un liquide de lavage et dans lequel le chien peut être en position debout, caractérisé en ce qu'elle présente dans son plan longitudinal vertical médian une section transversale la forme d'un U renversé dont les branches (1, 2) constituent des zones adaptées pour recevoir les jambes du chien tandis que la partie médiane (3) est surélevée en fonction de la hauteur du ventre du chien.

## Description

L'invention concerne une baignoire notamment pour chien réalisée sous forme d'un réceptacle de forme oblongue destiné à être rempli d'un liquide de lavage et dans lequel le chien peut être en position debout.

Les baignoires connues de ce type présentent l'inconvénient que la baignoire nécessite beaucoup d'eau, que le chien peut facilement se dégager et risque de glisser.

La présente invention a pour but de proposer une baignoire notamment pour chien, qui ne présente pas les inconvénients qui viennent d'être énoncés.

Pour atteindre ce but, la baignoire selon l'invention est caractérisée en ce qu'elle présente dans son plan longitudinal vertical médian une section transversale la forme d'un U renversé, dont les branches constituent des zones adaptées pour recevoir les jambes du chien tandis que la partie médiane est surélevée en fonction de la hauteur du ventre du chien.

Selon les caractéristiques avantageuses de l'invention, les branches précitées sont réalisées sous forme de pieds tronconiques qui constituent les extrémités de la baignoire et s'élargissent vers le haut, de façon à s'adapter à la morphologie du chien.

Selon une autre caractéristique avantageuse de l'invention, la baignoire comprend une paroi verticale creuse en-dessous de la partie médiane, qui s'ouvre latéralement et en haut dans les espaces internes respectivement des pieds et de la partie médiane et est fermée en bas, un organe d'évacuation du liquide contenu dans la baignoire étant disposé au fond de cette paroi creuse.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels:
- la figure 1 est une vue en perspective d'une baignoire selon l'invention ; et
- la figure 2 est une vue à plus grande échelle et en coupe selon la ligne II-II de la figure 1.

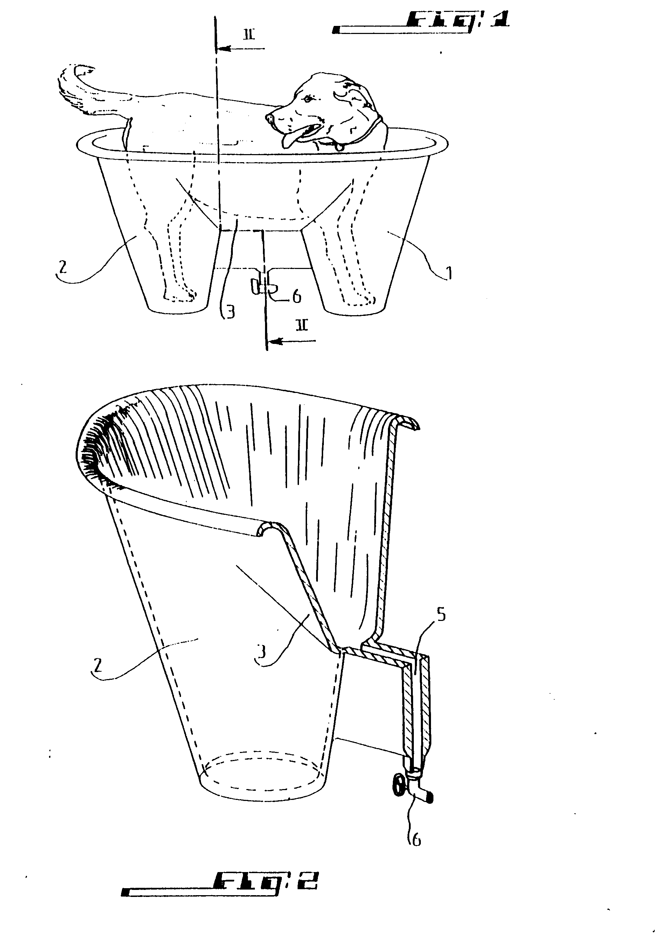

Comme il ressort des figures, la baignoire pour chien selon l'invention présente une forme oblongue et est adaptée à la morphologie du chien. A cette fin, la baignoire présente, dans son plan vertical médian longitudinal, une section transversale en forme d'un U renversé. Ainsi les extrémités de la' baignoire, qui constituent les branches du U, forment des pieds 1 et 2 tandis que la partie médiane 3 est surélevée. Il ressort clairement de la figure 1 que les pieds 1 et 2 sont adaptés pour recevoir les jambes avant et arrière du chien et la partie médiane 3 est surélevée en fonction du ventre de l'animal. Le fond des pieds 1 et 2 est plan et ceux-ci s'élargissent vers le haut de façon tronconique.

En-dessous de la partie médiane 3, la baignoire comprend une paroi creuse 5 qui s'ouvre dans l'espace interne des pieds et vers le haut. Cette paroi est fermée en bas et est pourvue d'un organe 6 permettant l'évacuation du liquide contenu dans la baignoire. L'organe est disposé en bas de la paroi 5.

Il ressort des figures et de la description qui vient d'être faite, que la baignoire, en raison de sa forme particulière nécessite relativement peu d'eau et empêche que les chiens puissent se dégager facilement ou puissent glisser dans cette baignoire.

## Revendications

1. Baignoire notamment pour chien, réalisée sous forme d'un réceptacle de forme oblongue destiné à être rempli d'un liquide de lavage et dans lequel le chien peut être en position debout, caractérisé en ce qu'elle présente dans son plan longitudinal vertical médian une section transversale la forme d'un U renversé dont les branches (1, 2) constituent des zones adaptées pour recevoir les jambes du chien tandis que la partie médiane (3) est surélevée en fonction de la hauteur du ventre du chien.

2. Baignoire selon la revendication 1, caractérisée en ce que les branches (1, 2) sont réalisées sous forme de pieds tronconiques qui constituent les extrémités de la baignoire et s'élargissent vers le haut, de façon à s'adapter à la morphologie du chien.

3. Baignoire selon la revendication 2, caractérisée en ce qu' elle comprend une paroi verticale (5) creuse en-dessous de la partie médiane surélevée (3) qui s'ouvre latéralement et en haut dans les espaces internes respectivement des pieds et de la partie médiane.

4. Baignoire selon la revendication 3, caractérisée en ce qu'un moyen d'évacuation (6) du liquide contenu dans la baignoire est prévu en bas de la paroi creuse (5).
